# EUROPEAN PATENT SPECIFICATION

(11) **EP 0 603 467 B1**
(45) Date of publication and mention of the grant of the patent: **16.10.1996**
(21) Application number: 93114251.7
(22) Date of filing: 06.09.1993
(51) Int. Cl.: A23G 1/20, A23G 3/20

(54) **Extrusion process**
Strangpressenverfahren
Procédé d'extrusion

(30) Priority: 29.09.1992 GB 9220477
(43) Date of publication of application: 29.06.1994
(73) Proprietor: SOCIETE DES PRODUITS NESTLE S.A., CH-1800 Vevey (CH)
(72) Inventor: Mackley, Malcolm Robert, Cambridge CB4 1AP (GB)
(74) Representative: Pate, Frederick George

(56) References cited:
- FR-A- 442 533
- FR-A- 570 732
- FR-A- 628 815
- FR-A- 2 334 304
- US-A- 1 628 251
- US-A- 1 649 307
- US-A- 2 332 211
- US-A- 3 098 746
- US-A- 4 426 402

## Description

The present invention relates to a continuous or batch extrusion process, more particularly to a process for extruding and forming chocolate or fat-containing confectionery in a solid or semi-solid state.

Fat-containing confectionery may include sugar, milk derived components, and fat and solids from vegetable or cocoa sources in differing proportions having a moisture content less than 10%, more usually less than 5% by weight.

Plain chocolate is obtained by mixing sugar, cocoa butter (and optionally other fats) and cocoa mass. Milk chocolate contains milk fat and milk non-fat solids as additional ingredients. White chocolate contains milk fat and milk non-fat solids, sugar and cocoa butter (and optionally vegetable fat) without the addition of cocoa mass. The chocolate ingredients are normally mixed and ground to a paste before conching at temperatures from 50° to 85°C for periods of time from a few hours to a few days depending on the type of product and the equipment used. The conched chocolate is then usually cooled by tempering to a temperature of usually about 28°-29°C for milk chocolate and about 29°-30°C for plain chocolate at which temperatures the chocolate is still pasty and pourable and can be moulded or used to enrobe confectionery centres. The tempered chocolate will set hard and become nonpourable on cooling or on standing at the final tempering temperature for a suitable period of time. On increasing the temperature of chocolate that has once been set hard and solid by tempering and cooling after tempering to temperatures of the order of 28°-30°C, the chocolate will still be solid and will not be pasty and pourable as it is immediately after tempering. In the present invention, by "chocolate in a solid or semi-solid non-pourable state" we mean chocolate that has been cooled normally after conching to set hard and solid either without tempering or by tempering followed by cooling or allowing to stand for a suitable period of time.

As the temperature of chocolate is progressively increased from 0°C it softens due to partial melting of the fats which surround the particulate material until at about 30°-35°C depending on the chocolate composition, the chocolate flows and has a viscosity that is sufficiently low for it to pour.

GB-A-223362 (FR-A-570732) describes a process of forming chocolate containers by forcing solid bulk chocolate by high pressure through an extrusion die, and keeping down the temperature of the chocolate engendered by friction during compression in the die, to cause the chocolate to be extruded in a hard dense non-porous mass in tubular form. It is stated that the high extrusion pressure generates considerable heat but that the extruded product should retain the form that it has as it issues from the extruder die.

GB-A-385571 describes a process of manufacturing tubular shaped chocolates wherein a slightly heated chocolate mass is moulded in a tube press similar to that used for pressing cold macaroni- and biscuit doughs, provided with a heating jacket whereby the tubes leaving the mouthpieces are so stiff that no subsequent change occurs on cooling.

FR-A-628815 (corresponds to GB-A-281,502) describes the production of moulded chocolate and indicates that the starting chocolate is flowable and pourable (p3, lines 32-36), cooling is carried out (p3, lines 90-91 and p4, lines 1-7), the initial moulded chocolate is in a melted or viscous state (claim 2g) and does not specify temporary flexibility or plasticity.

USP1628251 describes a method of forming chocolate candy in elongated form, which consists in forcing cold solid chocolate composition through a die under sufficiently heavy pressure to form a continuous piece of chocolate which retains the shape given it by said die. At page 1, lines 35 to 37, it states that on leaving the die, the chocolate is hard and strong enough for shipment.

USP1649307 describes a method of manipulating chocolate which consists of moulding it into the desired form by pressure while the chocolate is maintained below the temperature at which it liquefies. One form of apparatus described at page 5, lines 71 to 88 uses forming members having a constricted portion terminating in a nozzle and it is stated that when the shaped product issues from the nozzle, it has no other tendency than to hold the form and shape given thereto by the forming member.

It is quite clear that, in all the above patents describing the extrusion of chocolate at a temperature below its melting point or pour point, the chocolate issues from the outlet of the extruder in a hard or stiff form. None of these patents mentions any flexibility or the possibility of plastically deforming the cold extruded chocolate immediately after extrusion. In addition, none of these patents mentions a continuous process, co-extrusion or the subsequent direct injection moulding of the extruded non-pourable product into a downstream mould.

We have now devised a process and found, surprisingly, that solid or semi-solid non-pourable chocolate can be plastically extruded to produce a solid or semi-solid non-pourable product having substantially the same profile as the die exit of the extruder which product has a temporary flexibility which may persist for up to several hours before being lost. As a result of this temporary flexibility, plastic deformation or physical manipulation of the extrudate is possible before the flexibility is lost. In addition, our process can be carried out continuously, co-extrusion with other food materials is possible and the extruded product may be directly injection moulded.

According to the present invention there is provided a process for plastically extruding a fat containing confectionery material which comprises feeding the fat containing confectionery material having a moisture content of less than 10% into an extruder and applying pressure to the fat-containing confectionery material in a solid or semi-solid nonpourable state upstream of a flow constriction at a temperature of from 0°C to 35°C, a pressure of from 1 to 1000 bars, a contraction ratio greater than 1.5 and extrusion rate of greater than 0.1 cm/sec such that the fat-containing confectionery material is extruded and remains in a solid or semi-solid non-pourable state to produce an axially homogeneous extruded product having a cross section that is of the same profile as the exit of the flow constriction, which is capable of retaining its shape and which has a temporary flexibility or plasticity enabling it to be physically manipulated or plastically deformed before losing its flexibility or plasticity.

During the extrusion of the solid or semi-solid fat-containing confectionery material, the temperature of the fat-containing confectionery material may increase or decrease if there is external heating or cooling means. However, the temperature remains substantially unchanged under the conditions of the extrusion (i.e. temperature, pressure, contraction ratio and extrusion rate) from the input to the outlet of the flow constriction if there is no external heating or cooling means, i.e. the extrusion is substantially isothermal in this case. The use of external heating or cooling means is not excluded as long as the material being extruded remains in a solid or semi-solid non-pourable state throughout the extrusion from the input to the outlet of the flow constriction. In other words, the temperature of the fat-containing confectionery material is not caused to increase substantially by the extrusion process itself. The physical state of the fat-containing confectionery material is such that its general deformation behaviour during extrusion is of a plastic nature rather than that of a viscous fluid.

The fat-containing confectionery material may, if desired, be plain, milk or white chocolate.

The flow constriction in the extrusion process may be any narrowing of the cross sectional area of a conduit but it is usually a die.

Extrusion can be generated by a differential pressure across the flow constriction. This may be established, for example, by a ram extruder conveniently operating at a controlled rate or pressure. The extruder may be, for example, a Davenport extruder, a constant pressure extruder, a single screw extruder, a twin screw extruder or a Conform machine. The extrusion process may be continuous or batch.

The fat-containing confectionery material is preferably fed into the barrel of the extruder in the solid or semi-solid state. The material is, however, extruded in a solid or semi-solid non-pourable state. The fat-containing confectionery material may be in a granular or continuous state. When in granular state, the granular nature of the fat-containing confectionery material appears to be lost during extrusion to give an essentially uniform material.

The extrusion temperature may be from as low as 0°C to about 35°C depending on the composition, particularly the amount and type of fat present. When plain chocolate is used as the feed material, the extrusion temperature may be from 10° to 34°C, more usually from 15° to 32°C, preferably from 18° to 30°C and more preferably from 20° to 27°C. In the case of milk chocolate, the extrusion temperature may be from 10°C to 30°C, more usually from 15°C to 28°C, preferably from 18° to 27°C and more preferably from 20° to 26°C. It should be understood that, in this invention, when the chocolate is extruded at a temperature from 28° to 34°C it is in a solid or semi-solid non-pourable state after being set hard in contrast to chocolate which has not been set hard such as recently tempered chocolate which has not been set hard and is still pasty and pour able at such temperatures.

The extrusion process necessarily includes a form of deformation between the input and outlet of the extrusion system. The convergence or contraction ratio into any extrusion orifice or flow constriction exit is preferably greater than 1.5 where the convergence or contraction ratio is defined as the ratio of the inlet area to the minimum cross-sectional area of the die for a simple cylindrical extrusion geometry.

During extrusion, it is important that the fat-containing confectionery material does not become pourable and the extrusion temperature and pressure should be maintained below a level where this may happen.

The extrusion pressure is partially dependent, amongst other things, on the contraction ratio, the extrusion temperature and the confectionery composition and may be from 1 to 1000 bars, e.g. from 5 to 500 bars and typically from 5 to 250 bars.

A feature of the extrusion process is that for a given die configuration and material composition, the extrusion rate is weakly dependent upon the extrusion pressure.

The sectional geometry of the die may be of a square or profiled form. Typically, it might be a conical entry with an inlet cone angle of from 10° to 90°. The flow rate of the chocolate through the extruder die will depend amongst other things on extrusion pressure, temperature, die configuration and material formulation. Extrusion rates may vary from O.1cm/second to in excess of 1 metre/second, for instance.

A wide variety of die shapes may be used and the extruded fat-containing confectionery material may have a solid profiled or hollow section and essentially has the same shape as the die e.g. rods, spirals, twists, springs, hollow sections such as tubes and more complex shapes such as the letters of the alphabet as well as thin films having a thickness which may be as little as 100 microns.The dimensions of the die may depend on the desired size of the extruded product. A multi-orifice die head could also be used, if desired. Multi-material co-extrusion is also possible with this technique and the extrusion of the fat-containing confectionery material may be carried out as a co-extrusion with other food materials. Co-extrusion with other food materials such as ice cream, fondant, etc. is especially advantageous when the fat-containing confectionery material is extruded in a hollow or tubular form.

Whilst the flow constriction is necessary to extrude and plasticise the material, this may be an integral part of an injection mould in which case the final shape of the product would conform to that of the mould, e.g. hollow shells, solid shapes, etc. This embodiment is particularly useful when the fat-containing confectionery material is extruded in a solid profiled form. The injection moulding is much easier to control and there are significantly less losses of material when compared with normal injection moulding using a molten material. In addition, in contrast to most other injection moulding processes, the final product does not require cooling and can be packaged directly.

Injection moulding can be achieved at processing temperatures similar to those described above for our extrusion process and the extrudate, e.g. chocolate, is extruded through a flow constriction which may form the injection nozzle of the moulding machine. In one embodiment, the chocolate may flow within channels of the mould and subsequently flow through a narrow gate, e.g. from 100 to 500 microns, into a mould. The chocolate extrudes into the mould as a flexible filament of semi-solid chocolate. As the extrusion continues, owing to the post-extrusion flexibility of the chocolate, the mould progressively fills with chocolate until all of the mould is filled. At this point the pressure within the mould is sufficient to allow the full consolidation of the chocolate to occur. When this point has been reached no further flow occurs and the extrusion pressure can be released. At this point the mould can be opened and the injection moulded entities removed from the mould either mechanically or, for example, under vacuum. In this embodiment, the final product is substantially the same temperature as the feed material and, therefore, unlike most other injection moulding processes it is not necessary to have a cooling period immediately after the injection moulding has occurred. The temperature of the mould may vary over a broad range of temperatures but is conveniently approximately the same as the extrusion temperature within the ranges hereinabove described for the extrusion process. The injection moulding process may also include multi-feed injection into moulds using different components in each feed. In addition, the process may be used for coating centres which are positioned in the empty mould before injection moulding. The injection moulding process may, if desired, be fully automated.

The extruded product maintains good organoleptic properties and, although it initially retains the shape of the extrusion die, it has a post-extrusion flexibility or plasticity after extrusion which may persist for up to several hours before being lost. For example, the flexibility may last for 4 hours or more such as from 1 minute to 2 hours and more often from 5 minutes to 1 hour. By extruding chocolate below its melting point, there is no need for cooling tunnels, the product can be wrapped directly and it is possible to achieve exact weight control. In addition, owing to the flexibility or plasticity of the extrudate, physical manipulation or plastic deformation is possible before the flexibility or plasticity is lost, e.g. bending, tying into knots, of the extrudate downstream of the die enabling more complex forms of finished products other than the extrusion die profile to be achieved. The present invention also provides the use of an extruded fat-containing confectionery product obtainable by the process of the present invention which is capable of retaining its shape and which has a temporary flexibility or plasticity for physical manipulation or plastic deformation before losing its flexibility or plasticity. This technique can also be used in conjunction with other processes, such as injection moulding to give defined shaped products.

The following Examples further illustrate the present invention.

### Example 1

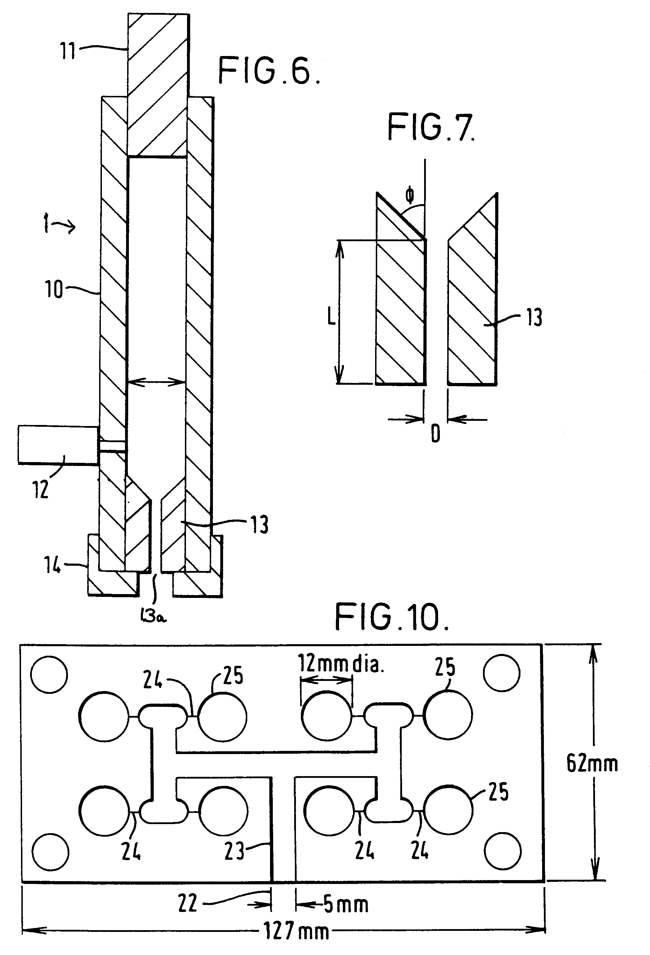

Milk chocolate buttons were fed into the barrel of a Davenport extrusion rheometer the barrel having been modified in order to have a side-mounted pressure transducer immediately above the extrusion die. The barrel diameter was 19.5 mm and the chocolate buttons were allowed to equilibrate at the extrusion temperature of 24°C. The material was then forced at a pressure of 50 bars through a die having a circular cross section of 4 mm diameter and 8 mm length and a 45° entry angle. Smooth continuous extrusions were obtained for two samples at flow rates of 16 mm /sec as shown in the accompanying Figures 1 and 2. The extruder (1) is shown in Figures 6 and 7 which illustrates a barrel 10, piston 11, pressure transducer 12, extrusion die 13 of length L, die exit 13a cross-section D and entry angle φ, and a retaining nut 14.

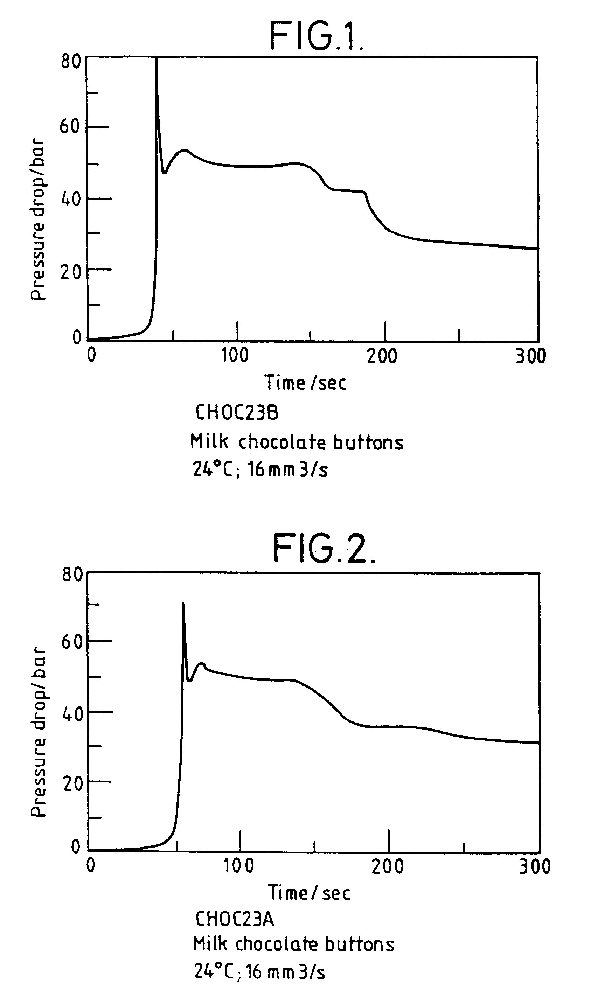

These Figures show the time evolution of the pressure profile during extrusion. After an initial yield pressure is reached, the extrusion pressure drops to an essentially constant value. On the cessation of flow ∼after 180 seconds in Figure 1) there is a relaxation of the extrusion pressure.

A solid non-pourable rod-shaped product was obtained which retained its shape but which was flexible for 30 minutes during which period it could be bent or twisted into knots before hardening.

### Example 2

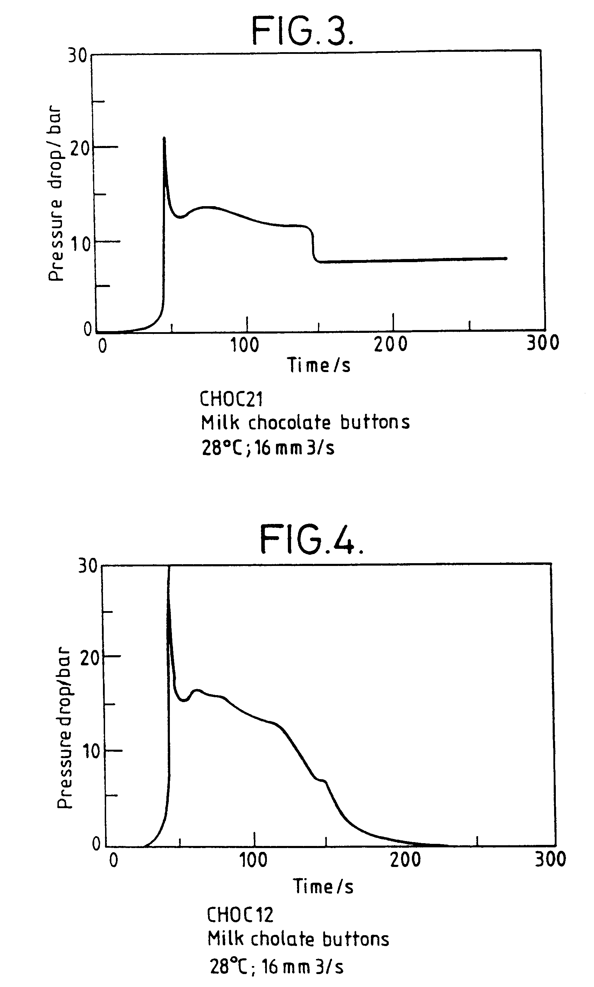

A similar procedure to that described in Example 1 was followed except that the extrusion temperature was 28°C. The results for two samples are shown in the accompanying Figures 3 and 4.

### Example 3

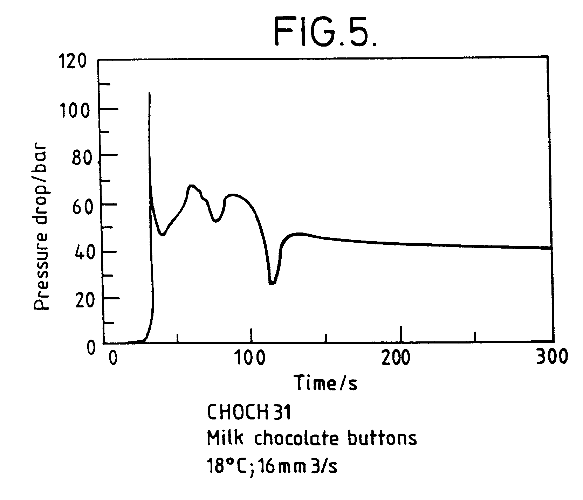

A similar procedure to that described in Example 1 was followed except that the extrusion temperature was 18°C. The results are shown in Figure 5.

### Example 4

Using a hydraucally-driven piston at an essentially constant pressure, the mass of chocolate being extruded through a small orifice exhibits weak dependence on the differential pressure across the die characterised by a logarithmic-linear relationship when extruding through a 4mm diameter orifice with flow rates between 1 and 100 cm/sec.

### Example 5

Using the method described in Example 4, chocolate was extruded through a 4mm die at various temperatures which required the following pressures to produce similar rates of output:

| **Temperature deg C** | **Start-up pressure bar** | **Flow pressure bar** |
|---|---|---|
| 20 | 500 | 470 |
| 24 | 200 | 180 |
| 27 | 50 | 40 |

### Example 6

A similar procedure to that described in 1

Example 4 was followed except that the orifice was replaced by a slit with dimensions of 1mm x 20 mm. A solid, non-pourable flexible thin ribbon of chocolate was produced at flow rates of from 1 to 100 cm/sec.

### Example 7

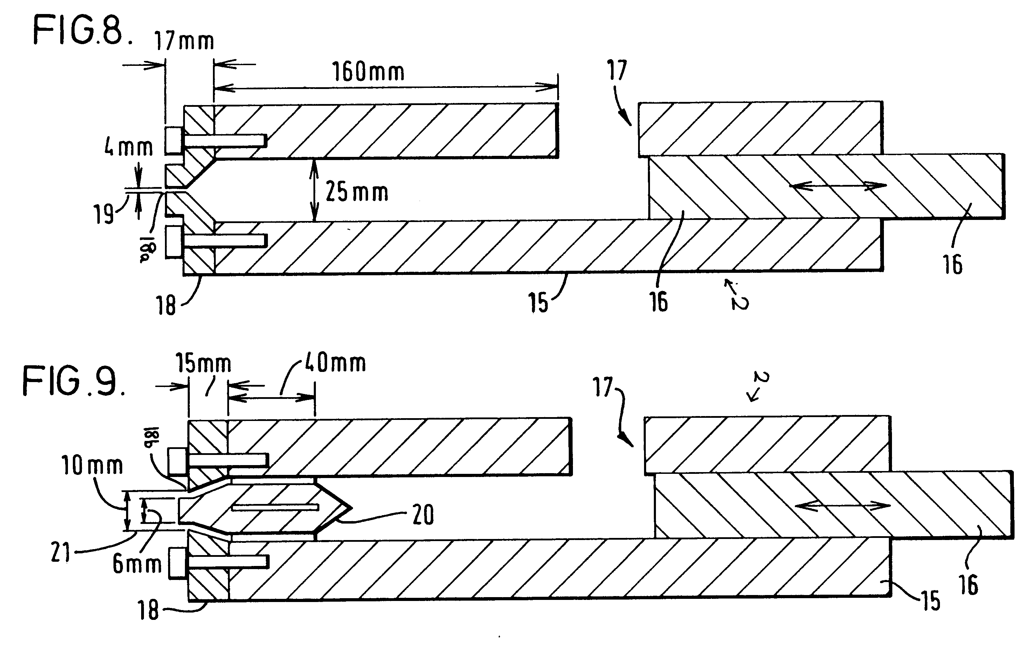

A Florin hydraulically driven ram extruder (2) is shown in Figure 8 and comprises a barrel 15, a hydraulically driven ram 16, feed opening 17, extrusion die 18, having a die exit 18a having a cross-section of 4mm diameter, and an internal barrel diameter of 25mm. Chocolate buttons were dropped in the feed opening 17 followed by hydraulically advancing the ram at a pressure of 80 bars and a temperature of 23°C. Semi-continuous solid non-pourable rods 19 of 4mm diameter were produced which retained their shape and had an initial flexibility which lasted for about 40 minutes.

### Example 8

A Florin extruder (2) similar to that shown in Figure 8 but having a centred "torpedo" 20 positioned in the barrel is illustrated in Figure 9. The die 18 has a die exit 18b The same procedure was followed as in Example 7 but, instead of producing rods, solid non-pourable hollow tubular sections 21 were produced having an outer diameter of lOmm and an internal diameter of 6mm. The tubes possessed a post-extrusion flexibility which lasted for about one hour.

Co-extrusion with fondant may be carried out∼by using a "torpedo" provided with a longitudinal channel through which the fondant flows to give a chocolate coated fondant.

### Example 9

A Florin ram extruder similar to that shown in Figure 8 but whose die has a cross-section of 5mm diameter was adapted to form the injection nozzle of a moulding machine illustrated in Figure 10. The injection moulding of the chocolate was carried out whereby the temperature of both the extruder and the mould was 25°C with the simultaneous pressurisation at 80 bars of the ram and the clamping of the split mould using hydraulic pressure. The semi-continuous rods 22 flowed within the channels 23 and then through the narrow gates 24 each having a width of 200 microns into the hollow spherical moulds 25 each having a diameter of 12mm. The chocolate extruded into each mould as a flexible filament of semisolid chocolate. As the extrusion continued, the mould progressively filled with chocolate until all of the mould (25) was filled. At this stage the pressure within the mould was sufficient to allow full consolidation of the chocolate to occur. When this point had been reached no further flow occurred and the extrusion pressure was released. The mould was then opened and the injection moulded chocolate entities removed from the mould mechanically. Unlike most other injection moulding processes, it was not necessary to cool the product immediately after the injection moulding and the product could be packaged directly.

## Claims

1. A process for plastically extruding a fat-containing confectionery material which comprises feeding the fat-containing confectionery material having a moisture content of less than 10% by weight into an extruder (1, 2), and applying pressure to the fat-containing confectionery material in a solid or semi-solid non-pourable state upstream of a flow constriction (13, 18) at a temperature of from 0°C to 35°C, a pressure of from 1 to 1000 bars, a contraction ratio of greater than 1.5 and an extrusion rate of greater than 0.1 cm/s such that the fat-containing confectionery material is extruded and remains in a solid or semi-solid non-pourable state to produce an axially homogeneous extruded product (19, 21) having a cross section that is of the same profile as the exit (13a, 18a, 18b) of the flow constriction, which is capable of retaining its shape and which has a temporary flexibility or plasticity enabling it to be physically manipulated or plastically deformed before losing its flexibility or plasticity.

2. A process according to claim 1 wherein the extrusion temperature is from 0° to 35°C.

3. A process according to claim 1 wherein, when the fat containing confectionery material is plain chocolate, the extrusion temperature is from 15° to 32°C.

4. A process according to claim 3 wherein the extrusion temperature is from 18° to 30°C.

5. A process according to claim 1 wherein, when the fat containing confectionery material is milk chocolate, the extrusion temperature is from 15° to 28°C.

6. A process according to claim 5 wherein the extrusion temperature is from 18° to 27°C.

7. A process according to claim 1 wherein the convergence or contraction ratio into any extrusion orifice or flow constriction exit is greater than 1.5.

8. A process according to claim 1 wherein the extrusion rate is from O.lcm/second to 1 metre/second.

9. A process according to claim 1 wherein the extrusion pressure is from 1 to 1000 bars.

10. A process according to claim 1 wherein the extrusion temperature and pressure are maintained below a level which would cause the fat-containing confectionery material to become pourable.

11. A process according to claim 1 wherein the sectional geometry of the flow constriction (13, 18) is of a square or profiled form.

12. A process according to claim 1 wherein the flow constriction (13, 18) has a conical entry with an inlet cone angle of from 10° to 90°

13. A process according to claim 1 wherein the extrudate (19, 21) has a hollow or profiled section.

14. A process according to claim 1 where the extrusion of the fat-containing confectionery material is carried out as a co-extrusion with other food materials.

15. A process according to claim 14 wherein the fat containing material is extruded in a tubular form.

16. A process according to claim 1 wherein the extrudate (19) from the exit of the flow constriction (13, 18) is filled into a mould (25) either directly or indirectly thus forming a moulded or shaped product.

17. A process according to claim 16 wherein the exit of the flow constriction (13, 18) forms the injection nozzle of an injection moulding machine.

18. A process according to claim 16 wherein the extrudate (19) is filled into the mould (25) at a temperature similar to that employed in the extrusion process according to claim 1.

19. A process according to claim 18 wherein the extrudate is chocolate which is injected through a gate (24) having a width of from 100 to 500 microns.

20. A process according to claim 16 wherein the moulded or shaped product is substantially the same temperature as the extrudate.

21. A process according to claim 16 wherein the moulding process includes multi-feed injection into moulds using different components in each feed.

22. A process according to claim 16 wherein centres are positioned in the empty mould before the extrudate is injected into the mould to coat the centres.

23. A process according to claim 1 wherein, after extrusion, physical manipulation or plastic deformation of the extrudate downstream of the die is effected.

24. A process according to claim 1 wherein the temperature of the fat-containing confectionery material remains substantially unchanged during the extrusion process.

25. Use of an extruded fat-containing confectionery product obtainable by a process according to any of the preceding claims which is capable of retaining is capable of retaining its shape and which has a temporary flexibility or plasticity for physical manipulation or plastic deformation before losing its flexibility or plasticity.

## Patentansprüche

1. Verfahren zum plastischen Extrudieren eines fetthaltigen Konfektmaterials, das das Einspeisen des fetthaltigen Konfektmaterials mit einem Feuchtigkeitsgehalt von weniger als 10 Gew.-% in einen Extruder (1, 2) und das Anlegen eines Drucks an das fetthaltige Konfektmaterial in einem festen oder halbfesten, nicht gießfähigen Zustand vor einer Stromverengung (13, 18) bei einer Temperatur von 0°C bis 35°C, einem Druck von 1 bis 1000 bar, einem Einschnürungsverhältnis von mehr als 1,5 und einer Extrusionsgeschwindigkeit von mehr als 0,1 cm/s umfaßt, so daß das fetthaltige Konfektmaterial extrudiert wird und in einem festen oder halbfesten, nicht gießfähigen Zustand bleibt und ein axial homogenes extrudiertes Produkt (19, 21) mit einem Querschnitt, der das gleiche Profil aufweist wie der Ausgang (13a, 18a, 18b) der Stromverengung hergestellt wird, das in der Lage ist, seine Form beizubehalten und das eine temporäre Flexibilität oder Plastizität aufweist, die es ermöglicht, daß es physikalisch manipuliert oder plastisch verformt wird, bevor es seine Flexibilität oder Plastizität verliert.

2. Verfahren nach Anspruch 1, bei dem die Extrusionstemperatur von 0°C bis 35°C beträgt.

3. Verfahren nach Anspruch 1, bei dem dann, wenn das fetthaltige Konfektmaterial reine Schokolade ist, die Extrusionstemperatur von 15°C bis 32°C beträgt.

4. Verfahren nach Anspruch 3, bei dem die Extrusionstemperatur von 18°C bis 30°C beträgt.

5. Verfahren nach Anspruch 1, bei dem dann, wenn das fetthaltige Konfektmaterial Milchschokolade ist, die Extrusionstemperatur von 15°C bis 28°C beträgt.

6. Verfahren nach Anspruch 5, bei dem die Extrusionstemperatur von 18°C bis 27°C beträgt.

7. Verfahren nach Anspruch 1, bei dem das Konvergenz- oder Einschnürungsverhältnis in eine Extrusionsöffnung oder einen Stromverengungsausgang größer als 1,5 ist.

8. Verfahren nach Anspruch 1, bei dem die Extrusionsgeschwindigkeit von 0,1 cm/s bis 1 m/s beträgt.

9. Verfahren nach Anspruch 1, bei dem der Extrusionsdruck von 1 bis 1000 bar beträgt.

10. Verfahren nach Anspruch 1, bei dem die Extrusionstemperatur und der Druck unterhalb eines Niveaus gehalten werden, das dazu führen würde, daß das fetthaltige Konfektmaterial gießfähig wird.

11. Verfahren nach Anspruch 1, bei dem die Querschnittsgeometrie der Stromverengung (13, 18) eine quadratische oder profilierte Form aufweist.

12. Verfahren nach Anspruch 1, bei dem die Stromverengung (13, 18) einen konischen Einlaß mit einem Einlaß-Konuswinkel von 10° bis 90° aufweist.

13. Verfahren nach Anspruch 1, bei dem das Extrudat (19, 21) einen hohlen oder profilierten Querschnitt aufweist.

14. Verfahren nach Anspruch 1, bei dem die Extrusion des fetthaltigen Konfektmaterials als eine Koextrusion mit anderen Nahrungsmittelmaterialen durchgeführt wird.

15. Verfahren nach Anspruch 14, bei dem das fetthaltige Material rohrförmig extrudiert wird.

16. Verfahren nach Anspruch 1, bei dem das Extrudat (19) aus dem Ausgang der Stromverengung (13, 18) entweder direkt oder indirekt in eine Form (25) eingefüllt wird, wodurch ein ge- oder verformtes Produkt gebildet wird.

17. Verfahren nach Anspruch 16, bei dem der Ausgang der Stromverengung (13, 18) die Injektionsdüse einer Spritzgußmaschine bildet.

18. Verfahren nach Anspruch 16, bei dem das Extrudat (19) in die Form (25) bei einer Temperatur eingefüllt wird, die derjenigen ähnlich ist, die bei dem Extrusionsprozeß nach Anspruch 1 angewandt wird.

19. Verfahren nach Anspruch 18, bei dem das Extrudat Schokolade ist, die durch einen Anschnitt (24) mit einer Weite von 100 bis 500 µm eingespritzt wird.

20. Verfahren nach Anspruch 16, bei dem das geformte Produkt im wesentlichen die gleiche Temperatur aufweist wie das Extrudat.

21. Verfahren nach Anspruch 16, bei dem das Formverfahren ein mehrfaches Einspritzen in Formen unter Verwendung unterschiedlicher Bestandteile bei jedem Einspritzen einschließt.

22. Verfahren nach Anspruch 16, bei dem in der leeren Form Zentren angeordnet werden, bevor das Extrudat in die Form eingespritzt wird, um die Zentren zu überziehen.

23. Verfahren nach Anspruch 1, bei dem nach der Extrusion eine physikalische Manipulation oder eine plastische Deformation des Extrudats stromab von der Düse bewirkt wird.

24. Verfahren nach Anspruch 1, bei dem die Temperatur des fetthaltigen Konfektmaterials während des Extrusionsverfahrens im wesentlichen unverändert bleibt.

25. Verwendung eines extrudierten fetthaltigen Konfektprodukts, das nach einem Verfahren nach einem der vorausgehenden Ansprüche erhältlich ist, das in der Lage ist, seine Form beizubehalten und daa eine temporäre Flexibilität oder Plastizität aufweist, für eine physikalische Manipulation oder eine plastische Verformung, bevor es seine Flexibilität oder Plastizität verliert.

## Revendications

1. Procédé pour l'extrusion plastique d'une substance de confiserie contenant une matière grasse, qui comprend l'introduction de la substance de confiserie contenant un matière grasse, ayant un teneur en humidité inférieure à 10 % en poids, dans une extrudeuse (1, 2) et l'application d'une pression à la substance de confiserie contenant une matière grasse à un état solide ou semi-solide, non apte à être versé, en amont d'une constriction d'écoulement (13, 18) à une température de 0°C à 35°C, une pression de 1 à 1000 bars, un rapport de contraction supérieur à 1,5 et une vitesse d'extrusion supérieure à 0,1 cm/s de telle sorte que la substance de confiserie contenant une matière grasse soit extrudée et reste à un état solide ou semi-solide, non apte à être versé, pour former un produit extrudé axialement homogène (19, 21) ayant une section transversale qui a le même profil que l'orifice de sortie (13a, 18a, 18b) de constriction d'écoulement, qui est capable de conserver sa forme et qui présente une flexibilité ou plasticité temporaire lui permettant d'être manipulé physiquement ou déformé plastiquement avant de perdre sa flexibilité ou plasticité.

2. Procédé suivant la revendication 1, dans lequel la température d'extrusion est comprise dans l'intervalle de 0° à 35°C.

3. Procédé suivant la revendication 1, dans lequel, lorsque la substance de confiserie contenant une matière grasse consiste en chocolat de ménage, la température d'extrusion est comprise dans l'intervalle de 15° à 32°C.

4. Procédé suivant la revendication 3, dans lequel la température d'extrusion est comprise dans l'intervalle de 18° à 30°C.

5. Procédé suivant la revendication 1, dans lequel, lorsque la substance de confiserie contenant une matière grasse consiste en chocolat au lait, la température d'extrusion est comprise dans l'intervalle de 15 à 28°C.

6. Procédé suivant la revendication 5, dans lequel la température d'extrusion est comprise dans l'intervalle de 18° à 27°C.

7. Procédé suivant la revendication 1, dans lequel le rapport de convergence ou de contraction dans n'importe quel orifice d'extrusion ou orifice de sortie de constriction d'écoulement est inférieur à 1,5.

8. Procédé suivant la revendication 1, dans lequel la vitesse d'extrusion est comprise dans l'intervalle de 0,1 cm/seconde à 1 mètre/seconde.

9. Procédé suivant la revendication 1, dans lequel la pression d'extrusion est comprise dans l'intervalle de 1 à 1000 bars.

10. Procédé suivant la revendication 1, dans lequel la température et la pression d'extrusion sont maintenues au-dessous d'une valeur qui rendrait la substance de confiserie contenant une matière grasse apte à être versée.

11. Procédé suivant la revendication 1, dans lequel la géométrie de section de la constriction d'écoulement (13, 18) a une forme carrée ou profilée.

12. Procédé suivant la revendication 1, dans lequel la constriction d'écoulement (13, 18) a une entrée conique avec un angle de cône d'admission de 10° à 90°.

13. Procédé suivant la revendication 1, dans lequel l'extrudat (19, 21) a une section creuse ou profilée.

14. Procédé suivant la revendication 1, dans lequel l'extrusion de la substance de confiserie contenant une matière grasse est effectuée sous forme d'une coextrusion avec d'autres substances alimentaires.

15. Procédé suivant la revendication 14, dans lequel la substance contenant une matière grasse est extrudée sous une forme tubulaire.

16. Procédé suivant la revendication 1, dans lequel l'extrudat (19) provenant de l'orifice de sortie de la constriction d'écoulement (13, 18) est chargé dans un moule (25) directement ou indirectement, en formant ainsi un produit moulé ou façonné.

17. Procédé suivant la revendication 16, dans lequel l'orifice de sortie de la constriction d'écoulement (13, 18) forme la buse d'injection d'une machine de moulage par injection.

18. Procédé suivant la revendication 16, dans lequel l'extrudat (19) est chargé dans le moule (25) à une température similaire à celle utilisée dans le procédé d'extrusion suivant la revendication 1.

19. Procédé suivant la revendication 18, dans lequel l'extrudat consiste en chocolat qui est injecté à travers une porte (24) ayant une largeur de 100 à 500 micromètres.

20. Procédé suivant la revendication 16, dans lequel le produit moulé ou façonné a une température pratiquement identique à celle de l'extrudat.

21. Procédé suivant la revendication 16, dans lequel le procédé de moulage comprend une injection de charges d'alimentation multiples dans des moules en utilisant des constituants différents dans chaque charge d'alimentation.

22. Procédé suivant la revendication 16, dans lequel des corps sont positionnés dans le moule vide avant d'injecter l'extrudat dans le moule pour le revêtement des corps.

23. Procédé suivant la revendication 1, dans lequel, après extrusion, une manipulation physique ou déformation plastique de l'extrudat en aval de la filière est effectuée.

24. Procédé suivant la revendication 1, dans lequel la température de la substance de confiserie contenant une matière grasse reste pratiquement inchangée au cours du procédé d'extrusion.

25. Utilisation d'un produit de confiserie extrudé contenant une matière grasse, pouvant être obtenu par un procédé suivant l'une quelconque des revendications précédentes, qui est capable de conserver sa forme et qui présente une flexibilité ou plasticité temporaire pour sa manipulation physique ou déformation plastique avant de perdre sa flexibilité ou plasticité.
